# EUROPÄISCHE PATENTSCHRIFT

(11) **EP 2 194 199 B1**
(45) Veröffentlichungstag und Bekanntmachung des Hinweises auf die Patenterteilung: **28.09.2011**
(21) Anmeldenummer: 08021160.0
(22) Anmeldetag: 05.12.2008
(51) Int. Cl.: E03F 3/04, B23Q 9/00, B27C 5/10

(54) **Verfahren und Vorrichtung zur Sanierung einer Schlitzrinne**
Method and device for renewing a slot channel
Procédé et dispositif destinés à l'assainissement d'un caniveau à fente

(43) Veröffentlichungstag der Anmeldung: 09.06.2010
(73) Patentinhaber: IQS Engineering AG, 6300 Zug (CH)
(72) Erfinder: Brechwald, Markus, 45699 Herten (DE); Müller, Klaus, 8126 Zumikon (CH); Olbrich, Norbert, 63694 Limeshain (DE)
(74) Vertreter: Schaad, Balass, Menzl & Partner AG

(56) Entgegenhaltungen:
- DE-A1- 3 221 960
- DE-A1- 19 752 325
- FR-A- 2 752 253
- GB-A- 2 375 075
- US-A- 4 830 555
- US-A1- 2004 262 020

## Beschreibung

Die vorliegende Erfindung betrifft ein Verfahren zur Sanierung einer Schlitzrinne gemäss dem Oberbegriff des Anspruchs 1.

Die Erfindung betrifft ferner eine Vorrichtung zur Wiederherstellung der Funktion einer Schlitzrinne gemäss dem Oberbegriff des Anspruchs 5.

Zur linienförmigen Entwässerung im Wesentlichen horizontaler Verkehrs- oder Wasserschutzflächen werden Schlitzrinnen eingesetzt. Schlitzrinnensysteme eignen sich besonders zum schnellen und sicheren Ableiten von Oberflächenwasser bei Verkehrsflächen. Sie werden eingebaut in Stadt-, Land und Bundesstrassen, sowie Flugverkehrsflächen, Bundesautobahnen, Stand- und Parkflächen. Bei Straßentunnel und Betankungsanlagen dienen sie zum schnellen Abführen von ausgelaufenen Flüssigkeiten. In Industrieanlagen erlauben sie ein sicheres Auffangen von aggressiven Medien.

Schlitzrinnen weisen einen länglichen Rinnenkörper auf, in dem sich ein Kanal in Längsrichtung erstreckt, wobei mindestens ein Schlitz den Kanal mit der Oberseite des Rinnenkörpers verbindet. Der Rinnenkörper wird aus einem Beton mit einer Stahlarmierung hergestellt. Bekannte Schlitzrinnen haben einen trapezförmigen, sich von der Unterseite zur Oberseite hin verjüngenden Querschnitt.

Es werden Schlitzrinnen mit durchgehendem Schlitz und mit unterbrochenem Schlitz verwendet.

Schlitzrinnen mit unterbrochenem Schlitz, also mit gegeneinander aussteifenden Stegen, werden dort eingesetzt, wo hohe Belastungen der Rinne quer zur Rinnenachse auftreten.

Für die Abdichtung der Verbindungen von Schlitzrinnen werden Dichtringe nach DIN 4060 benötigt. Zum Verschluss des Fugenspaltes in der Strassenoberfläche wird z.B. bituminöse Fugenvergussmasse verwendet.

Schlitzrinnen der oben erwähnten Art werden auf aufgeschütteten Boden gesetzt. Beidseitig an die Schlitzrinnen wird eine Dehnfuge aus Weichfasermatten und/oder Bitumen als Fugenmasse angebracht. Dann wird die Aufschüttung an den Seiten der Schlitzrinne erhöht. Schliesslich wird auf der Oberseite der Aufschüttung eine Betonschicht aufgebracht, die oben bündig mit der Oberseite der Schlitzrinne abschliesst.

Zu den einzelnen Typen von Schlitzrinnen gibt es entsprechende Reinigungsrohre und Entwässerungsschächte. Schlitzrinnen mit eingearbeitetem Innengefälle von 0.5% eignen sich für Verkehrsflächen ohne Gefälle. Sämtliche Schlitzrinnentypen werden aus Beton mit Frost- bzw. Tausalzbeständigkeit, Widerstand gegen chemische Angriffe, hoher Abriebsfestigkeit und Wasserundurchlässigkeit hergestellt. Stahlbetonschlitzrinnen werden nach DIN 1045-1 bemessen. Für die dabei anzusetzenden Lasten gilt der DIN- Fachbericht 101, Lastmodel 1 (LM1), Lastmodell 2 (LM2) und für Sonderbelastungen auf Flugverkehrsflächen die Ansätze der PCN Klassifikation. Spezielle Belastungen bei Containerflächen müssen gesondert berücksichtigt werden.

Wenn Schlitzrinnensysteme undichte Stellen aufweisen ist ihre Sanierung erforderlich. Die Auswechslung von Schlitzrinnen erfordert einen relativ hohen Kosten- und Zeitaufwand.

Dokument FR 2 752 253 offenbart ein Verfahren gemäss dem Oberbegriff des Anspruchs 1, wobei der Auskleidungsschlauch des verschlossenen Rinnenschlitzes mittels zweier Schneidscheiben geöffnet wird.

Dokument US 2004/262020 offenbart eine Vorrichtung mit einem Schienenstrangsystem, dass z.B. an einem Werkstück angeordnet und dessen Schlitten über eine Steuerung bewegt werden kann. Auf dem Schlitten ist ein Kreuzschlitten gelagert, welcher ebenfalls gesteuert bewegbar ist. Der Kreuzschlitten weist eine Haltevorrichtung auf, um ein Werkzeug oder einen Positionssensor zu tragen.

Der Erfindung liegt die Aufgabe zugrunde, ein Verfahren und eine Vorrichtung zur Verfügung zu stellen, welche die Sanierung von Schlitzrinnensystemen mit relativ niedrigem Kosten- und Zeitaufwand ermöglichen.

Gemäss einem ersten Aspekt der Erfindung wird die oben erwähnte Aufgabe mit einem Verfahren gemäss Anspruch 1 gelöst. Vorteilhafte Ausgestaltungen dieses Verfahrens sind in den abhängigen Verfahrensansprüchen angegeben.

Gemäss einem zweiten Aspekt der Erfindung wird die oben erwähnte Aufgabe mit einer Vorrichtung gemäss Anspruch 5 gelöst. Vorteilhafte Ausgestaltungen dieser Vorrichtung sind in den abhängigen Vorrichtungsansprüchen angegeben.

Die Erfindung ermöglicht die Sanierung von Schlitzrinnensystemen mit relativ niedrigem Kosten- und Zeitaufwand.

Weitere Vorteile und Eigenschaften des erfindungsgemässen Verfahrens und der erfindungsgemässen Vorrichtung gehen aus der nachstehenden Beschreibung von Ausführungsbeispielen hervor, welche anhand der beiliegenden Zeichnungen erläutert werden. Es zeigen
- Fig. 1: eine Querschnittansicht einer Schlitzrinne 21, welche zu deren Sanierung mit einem Auskleidungsschlauch 22 versehen worden ist;
- Fig. 2: eine Draufsicht der Schlitzrinne 21 gemäss Fig. 1 auf der ein Teil einer erfindungsgemässen Vorrichtung aufgesetzt ist;
- Fig. 3: eine Querschnittansicht der Anordnung gemäss Fig. 2 in der zusätzlich eine Oberfräse dargestellt ist, welche zur erfindungsgemässen Vorrichtung gehört;
- Fig. 4: eine Längsschnittansicht der in Fig. 3 dargestellten Anordnung;
- Fig. 5: eine vergrösserte Darstellung der in Fig. 3 dargestellten Querschnittansicht mit der Längsachse der Oberfräse in vertikaler Lage;
- Fig. 6: eine Querschnittansicht analog zu Fig. 5, bei der die Längsachse der Oberfräse um einen bestimmten Winkel von der vertikalen Richtung abgeschwenkt ist.

Ein Ausführungsbeispiel des erfindungsgemässen Verfahrens wird nachstehend beschrieben.

Erfindungsgemäss umfasst das Verfahren zur Sanierung einer Schlitzrinne grundsätzlich folgende Schritte:
In einem ersten Schritt wird eine Schlitzrinne 21 mittels eines an sich, im Zusammenhang mit der Sanierung von Abwasserleitungen, bekannten Verfahrens, das sogenannte Schlauchlining-Verfahren, mit einem mit aushärtbarem, schrumpfarmem Kunstharz imprägnierten Auskleidungsschlauch (sogenannter "Schlauchliner" bzw. Inliner) 22 versehen, der als Innenauskleidung an die Rinnenwandung z.B. mittels Wasserdruck oder Luftdruck angepresst und ausgehärtet wird, an der Rinnenwandung 23 formschlüssig anliegt und an ihr kraftschlüssig verklebt wird.

Das bekannte Verfahren, mit dem die Schlitzrinne 21 mit dem Auskleidungsschlauch 22 versehen wird, ist unter anderem aus folgender Publikation bekannt: Stein, D., Niederehe W., "Instandhaltung von Kanalisationen", 2. überarbeitete und erweiterte Auflage, Verlag Ernst & Sohn, Berlin.

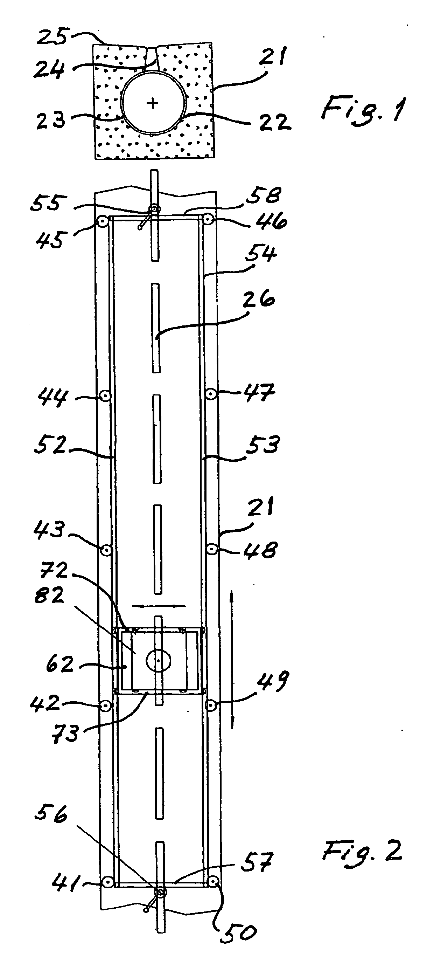

Fig. 1 zeigt die Schlitzrinne 21, welche nach dem oben erwähnten ersten Verfahrensschritt mit dem Auskleidungsschlauch 22 versehen ist.

Wie aus der Fig. 1 ersichtlich wird den Rinnenschlitz 24 durch den Auskleidungsschlauch 22 verschlossen, und dadurch wird die Funktion der Schlitzrinne 21 als Entwässerungsmittel verunmöglicht.

In einem zweiten Schritt wird der durch den Auskleidungsschlauch 22 verschlossenen Rinnenschlitz 24 durch Auffräsen des Auskleidungsschlauchs 22 geöffnet und dadurch die Funktion der Schlitzrinne 21 als Entwässerungsmittel wiederhergestellt. Ein Ausführungsbeispiel einer erfindungsgemässen Vorrichtung zur Durchführung des zweiten Schritts des erfindungsgemässen Verfahrens wird anhand der Figuren 1-6 beschrieben.

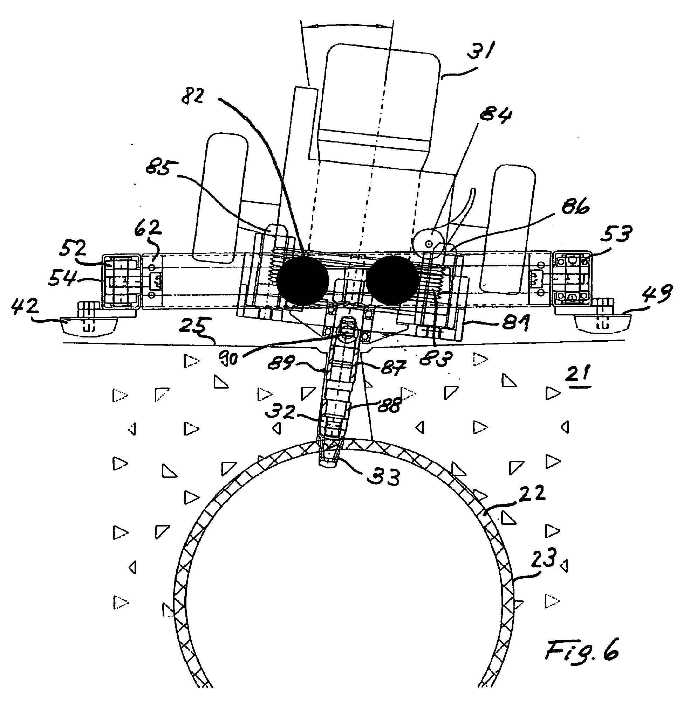

Im zweiten Schritt wird das Fräsen des Auskleidungsschlauchs 22 von der zur Umgebung freiliegenden Schlitzrinnenoberfläche 25 her durchgeführt. Der zweite Schritt wird mit einem Frässystem durchgeführt, wobei den Fräskopf 32 des Frässystems durch den Rinnenschlitz 24 der Schlitzrinne 21 eingeführt beziehungsweise abgesenkt wird, entlang der Längsachse der Schlitzrinne 21 bewegt wird, und Schwenkbewegungen in Ebenen ausführt, die senkrecht zur Längsachse der Schlitzrinne 21 liegen. Vorzugsweise wird dabei der Fräskopf 32 über zwei Abrollringe 87, 88 geführt, die den Abstand der polykristallinen Frässchneiden 33 des Fräskopfes 32 zur Betonoberfläche 89 bestimmen (vergleiche Fig. 6).

In einer bevorzugten Ausführungsform wird der zweite Schritt mit einem Frässystem durchgeführt, dessen Bedienung manuell erfolgt.

In einer weiteren bevorzugten Ausführungsform wird der zweite Schritt mit einem Frässystem durchgeführt, dessen Bedienung maschinell erfolgt.

In einer weiteren bevorzugten Ausführungsform wird der zweite Schritt mit einem Frässystem durchgeführt, das mit einem Elektromotor, Druckluftmotor oder Hydraulikmotor angetrieben wird.

In einer bevorzugten Ausführungsform wird die Schlitzrinne 21 in einem dritten Schritt mit Wasserhochdruckspülung gereinigt.

Ein Ausführungsbeispiel einer erfindungsgemässen Vorrichtung, welche zur Durchführung des zweiten Schritts des oben erwähnten erfindungsgemässen Verfahrens dient, wird nachstehend anhand der Figuren 2-6 beschrieben. Mit dieser Vorrichtung wird die Funktion der Schlitzrinne wiederhergestellt. Diese Vorrichtung ist bei Schlitzrinnen mit durchgehendem und mit unterbrochenem Schlitz verwendbar.

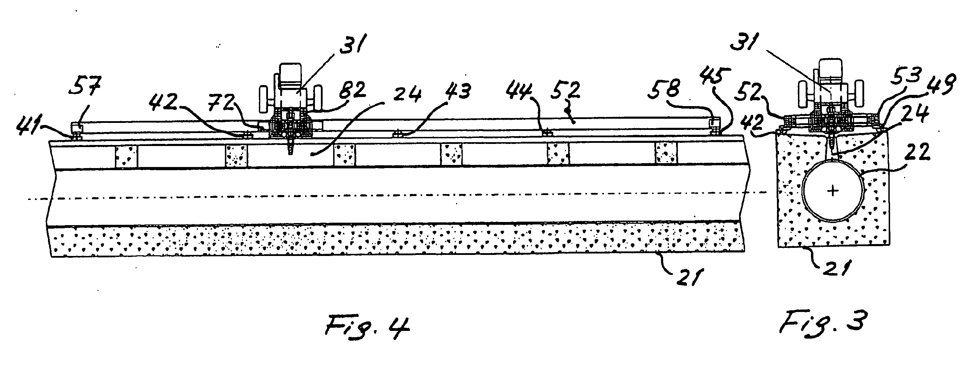

Wie in den Figuren 3-6 dargestellt, enthält die erfindungsgemässe Vorrichtung eine Oberfräse 31 und eine Transporteinrichtung zum Transport der Oberfräse 31. Diese Transporteinrichtung enthält einen Oberfräse-Halter 81. Die Transporteinrichtung zum Transport der Oberfräse 31 enthält ausser dem Oberfräse-Halter 81 folgende Komponenten:
eine erste in den Figuren 2-4 dargestellte Parallelführung, welche zwei geradlinige, zueinander parallele, im vorliegenden Fall im Querschnitt C-förmige Führungen 52, 53 enthält und Teil eines rechteckigen Rahmens 54 ist, welcher ausserdem Querverbindungen 57, 58 und Abstutzfüsse 41-50 umfasst und auf der Schlitzrinne 21 so aufsetzbar ist, dass die Führungen 52, 53 der ersten Parallelführung parallel zur Längsachse der Schlitzrinne 21 beziehungsweise parallel zu den Rinnenschlitzen 24 verlaufen, und eine in den Figuren 2-6 dargestellte Kreuzschlitteneinheit, welche einen ersten Schlitten 62 enthält, welcher entlang der oben erwähnten Führungen 52, 53 der ersten Parallelführung fahrbar ist, und eine zweite Parallelführung enthält, welche zwei geradlinige, zueinander parallele Führungen 72, 73 umfasst, und einen zweiten Schlitten 82 der auf den ersten Schlitten 62 angeordnet ist und entlang der Führungen 72, 73 der zweiten Parallelführung fahrbar ist. Die Führungen 72, 73 der zweiten Parallelführung verlaufen rechtwinklig zur ersten Parallelführung und weisen vorzugsweise ebenfalls einen C-förmigen Querschnitt auf.

Der Oberfräse-Halter 81 ist auf den zweiten Schlitten 82 montiert, und enthält eine gefederte Oberfräse-Halterung 83, wobei der Oberfräse-Halter 81 um eine Drehachse 90 schwenkbar am zweiten Schlitten 82 gelagert ist, die vorzugsweise in einer vertikalen Symmetrieebene der Schlitzrinne 21 liegt und welche parallel zur Längsachse der Schlitzrinne 21 beziehungsweise den Rinnenschlitzen 24 angeordnet ist. Die Oberfräse 31 stützt sich auf Federn der Oberfräse-Halterung 83, welche in Richtung der Federn verlaufende Führungsbolzen 85,86 zum Führen der Oberfräse beim Absenken gegen die Kraft der Feder und wieder Anheben aufweist.

In einer bevorzugten Ausführungsform, welche in der Fig. 2, dargestellt ist, weist der Rahmen 54 der ersten Parallelführung Exzenterklemmungen 55, 56 auf, die auf den Querverbindungen befestigt und in den Rinnenschlitz 24 einführbar sind und zur Ausrichtung der ersten Parallelführung dienen, so dass die Oberfräse 31 entlang einer Bahn geführt werden kann, die mit der Längsachse der Schlitzrinne in einer Linie liegt.

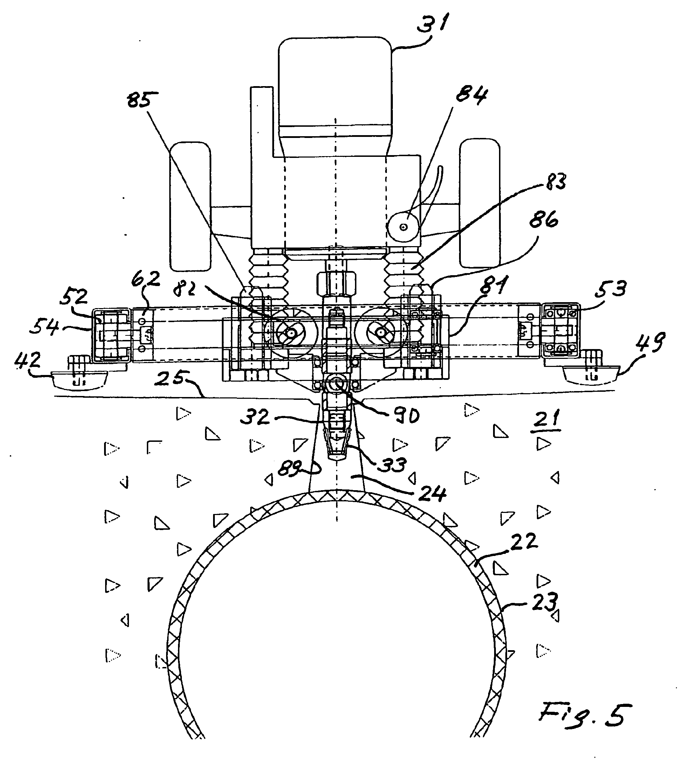

In einer bevorzugten Ausführungsform, welche in den Figuren 5 und 6 dargestellt ist, enthält die gefederte Oberfräse-Halterung 83 einen Klemmhebel 84, mit dem die Lage der Oberfräse 31 für die gewünschte Bearbeitungstiefe fixierbar ist

In einer bevorzugten Ausführungsform, welche in der Fig. 6 dargestellt ist, ist der Schwenkbereich der Oberfräse-Halterung 83 so bemessen, dass er eine dem negativ konischen Rohrausschnitt sowie dem Bogenmass der Ausbildung des Auskleidungsschlauchs angepasste Positionierung des Fräskopfs 32 der Oberfräse 31 während der Fräsarbeit ermöglicht.

Wenn die Schlitzrinne eine unterbrochene Schlitzrinne mit einer Vielzahl von in Linie hintereinander angeordneten Einzelschlitzen 26 umfasst, hat der Rahmen 54 der ersten Parallelführung vorzugsweise eine Länge, die mindestens zwei Einzelschlitze 26 der Schlitzrinne überdeckt.

In einer bevorzugten Ausführungsform deckt der Drehzahlbereich der Oberfräse 31 einen Bereich von 8000 bis 26000 rpm ab und der Leistungsbereich der Oberfräse 31 deckt einen Bereich von 1.25 bis 3.85 KW ab.

In einer bevorzugten Ausführungsform hat die Oberfräse 31 einen Fräskopf 32, welcher mit Polykristallinen Schneiden bestückt ist und wahlweise einen Durchmesser von 15 bis 18 Millimeter besitzt.

Der erste Schlitten 62 und der zweite Schlitten 82 weisen vorzugsweise Rollen auf, die an den entsprechenden Parallelführungen, vorzugsweise in den Profilen mit dem C-förmigen Querschnitt, geführt sind.

Die vorangehende Beschreibung gestattet dem Fachmann eine Vielzahl Abwandlungen der erfindungsgemässen Vorrichtungen und Verfahren, ohne den Schutzbereich der Erfindung zu verlassen der durch die Patentansprüche definiert ist.

## Patentansprüche

1. Verfahren zur Sanierung einer Schlitzrinne mit einem Rinnenschlitz, bei dem in einem ersten Schritt die Schlitzrinne (21) mit einem mit aushärtbarem, insbesondere schrumpfarmem Kunstharz imprägnierten Auskleidungsschlauch (22) als Innenauskleidung versehen wird, der an die Rinnenwandung angepresst und ausgehärtet wird, wobei der Auskleidungsschlauch (22) den Rinnenschlitz (24) verschliesst, und in einem zweiten Schritt der durch den Auskleidungsschlauch (22) verschlossene Rinnenschlitz (24) geöffnet wird, **dadurch gekennzeichnet, dass** der zweite Schritt mit einem Frässystem durchgeführt wird, wobei ein Fräskopf (32) des Frässystems durch den Rinnenschlitz (24) eingeführt wird, entlang der Längsachse der Schlitzrinne (21) bewegt wird, und Schwenkbewegungen in Ebenen ausgeführt werden, die senkrecht zur Längsachse der Schlitzrinne (21) liegen.

2. Verfahren gemäss Anspruch 1, **dadurch gekennzeichnet, dass** in einem dritten Schritt die Schlitzrinne (21) mit Wasserhochdruckspülung gereinigt wird.

3. Verfahren gemäss Anspruch 1 oder 2, **dadurch gekennzeichnet, dass** der Fräskopf (32) über wenigstens einen Abrollring, vorzugsweise zwei Abrollringe (87, 88) geführt wird, die den Abstand der polykristallinen Frässchneiden (33) des Fräskopfes (32) zu einer den Rinnenschlitz (24) begrenzenden Oberfläche (89) der Schlitzrinne (21) bestimmen.

4. Verfahren nach einem der Ansprüche 1 bis 3, **dadurch gekennzeichnet, dass** der Auskleidungsschlauch (22) durch das Anpressen und Aushärten mit der Schlitzrinne (21) form- und kraftschlüssig verklebt wird.

5. Vorrichtung zur Wiederherstellung der Funktion einer Schlitzrinne, die mit einem Verfahren gemäss Anspruch 1 mit dem erwähnten Auskleidungsschlauch (22) versehen ist, welcher den Rinnenschlitz (24) verschliesst, **dadurch gekennzeichnet, dass** sie folgende Komponenten umfasst:
- eine Oberfräse (31), und
- eine Transporteinrichtung zum Transport der Oberfräse (31), welche Transporteinrichtung folgende Komponenten enthält:
- eine erste Parallelführung, welche zwei geradlinige, zueinander parallele Führungen (52, 53) enthält und Teil eines rechteckigen Rahmens (54) ist, welcher auf der Schlitzrinne (21) so aufsetzbar ist, dass die Führungen (52, 53) der ersten Parallelführung parallel zum Rinnenschlitz (24) und vorzugsweise parallel zur Längsachse der Schlitzrinne (21) verlaufen,
- eine Kreuzschlitteneinheit, welche einen ersten Schlitten (62) enthält, welcher entlang der oben erwähnten Führungen (52, 53) der ersten Parallelführung fahrbar ist und eine zweite Parallelführung enthält, welche zwei geradlinige, zueinander parallele Führungen (72, 73) umfasst, und
einen zweiten Schlitten (82) der auf den ersten Schlitten (62) angeordnet ist und entlang der Führungen (72, 73) der zweiten Parallelführung fahrbar ist, und
- einen Oberfräse-Halter (81), welcher auf den zweiten Schlitten (82) montiert ist und eine gefederte Oberfräse-Halterung (83) aufweist, wobei der Oberfräse-Halter (81) um eine Drehachse (90) schwenkbar ist, die parallel zu den Führungen (52,53) der ersten Parallelführung angeordnet ist.

6. Vorrichtung gemäss Anspruch 5, **dadurch gekennzeichnet, dass** der Rahmen (54) der ersten Parallelführung Exzenterklemmungen (55, 56) aufweist, die in den Rinnenschlitz (24) einführbar sind und zur Ausrichtung der ersten Parallelführung dienen, so dass die Oberfräse (31) entlang einer Bahn geführt werden kann, die mit der Längsachse der Schlitzrinne (21) in einer Linie liegt.

7. Vorrichtung gemäss Anspruch 5 oder 6, **dadurch gekennzeichnet, dass** die gefederte Oberfräse-Halterung (83) einen Klemmhebel (84) enthält, mit dem die Lage der Oberfräse (31) für die gewünschte Bearbeitungstiefe fixierbar ist.

8. Vorrichtung gemäss einem der Ansprüche 5 bis 7, **dadurch gekennzeichnet, dass** der Schwenkbereich der Oberfräse-Halterung (83) so bemessen ist, dass er eine dem negativ konischen Rohrausschnitt sowie dem Bogenmass der Ausbildung des Auskleidungsschlauchs (22) angepasste Positionierung des Fräskopfs (32) der Oberfräse (31) während der Fräsarbeit ermöglicht.

9. Vorrichtung gemäss einem der Ansprüche 5 bis 8, **dadurch gekennzeichnet, dass** die Schlitzrinne (21) eine unterbrochene Schlitzrinne (21) mit einer Vielzahl von voneinander getrennten in Linie angeordneter Rinnenschlitze (24) umfasst, und der Rahmen (54) der ersten Parallelführung eine Länge hat, die mindestens zwei Einzelschlitze (26) der Schlitzrinne (21) überdeckt.

## Claims

1. Method for renewing a slot channel having a channel slot, in which, in a first step, the slot channel (21) is provided with an inliner (22) as the inner lining, said inliner (22) being impregnated with a curable, in particular shrink-resistant synthetic resin, and being pressed onto the channel wall and cured, the inliner (22) closing the channel slot (24), and, in a second step, the channel slot (24) which is closed by the inliner (22) is opened, **characterized in that** the second step is carried out with a milling system, a milling head (32) of the milling system being introduced through the channel slot (24) and being moved along the longitudinal axis of the slot channel (21), and pivoting movements being executed in planes which lie perpendicularly to the longitudinal axis of the slot channel (21).

2. Method according to Claim 1, **characterized in that**, in a third step, the slot channel (21) is cleaned by high-pressure flushing with water.

3. Method according to Claim 1 or 2, **characterized in that** the milling head (32) is guided via at least one rolling ring, preferably two rolling rings (87, 88) which determine the distance of the polycrystalline milling cutting edges (33) of the milling head (32) from a surface (89) of the slot channel (21), which surface bounds the channel slot (24).

4. Method according to one of Claims 1 to 3, **characterized in that** the inliner (22) is adhesively bonded in a form-fitting and frictional manner to the slot channel (21) by being pressed on and cured.

5. Device for restoring the operation of a slot channel which is provided with the mentioned inliner (22), which closes the channel slot (24), by a method according to Claim 1, **characterized in that** the device comprises the following components:
- a router (31), and
- a transport means for transporting the router (31), which transport means contains the following components:
- a first parallel guide which contains two rectilinear, mutually parallel guides (52, 53) and is part of a rectangular frame (54) which can be placed onto the slot channel (21) in such a manner that the guides (52, 53) of the first parallel guide run parallel to the channel slot (24) and preferably parallel to the longitudinal axis of the slot channel (21),
- a compound slide unit which contains a first slide (62) which is movable along the abovementioned guides (52, 53) of the first parallel guide and contains a second parallel guide which comprises two rectilinear, mutually parallel guides (72, 73), and a second slide (82) which is arranged on the first slide (62) and is movable along the guides (72, 73) of the second parallel guide, and
- a router holder (81) which is mounted on the second slide (82) and has a sprung router mounting (83), the router holder (81) being pivotable about an axis of rotation (90) which is arranged parallel to the guides (52, 53) of the first parallel guide.

6. Device according to Claim 5, **characterized in that** the frame (54) of the first parallel guide has eccentric clamps (55, 56) which can be introduced into the channel slot (24) and serve to align the first parallel guide such that the router (31) can be guided along a track lying in a line with the longitudinal axis of the slot channel (21).

7. Device according to Claim 5 or 6, **characterized in that** the sprung router mounting (83) contains a clamping lever (84) with which the position of the router (31) can be fixed for the desired machining depth.

8. Device according to one of Claims 5 to 7, **characterized in that** the pivoting range of the router mounting (83) is dimensioned so as to permit the milling head (32) of the router (31) to be positioned during the milling operation in a manner matched to the negatively conical tube sector and the circular measure of the design of the inliner (22).

9. Device according to one of Claims 5 to 8, **characterized in that** the slot channel (21) comprises an interrupted slot channel (21) with a multiplicity of channel slots (24) which are separated from one another and are arranged in a line, and the frame (54) of the first parallel guide is of a length which covers at least two individual slots (26) of the slot channel (21).

## Revendications

1. Procédé pour l'assainissement d'un caniveau à fente comprenant une fente de caniveau, dans lequel, dans une première étape, le caniveau à fente (21) est pourvu, en tant qu'habillage interne, d'un tuyau flexible d'habillage (22) imprégné de résine synthétique durcissable, notamment à faible retrait, qui est pressé et durci sur la paroi du caniveau, le tuyau flexible d'habillage (22) fermant la fente de caniveau (24), et dans une deuxième étape, la fente de caniveau (24) fermée par le tuyau flexible d'habillage (22) étant ouverte, **caractérisé en ce que** la deuxième étape est réalisée avec un système de fraisage, une tête de fraisage (32) du système de fraisage étant introduite à travers la fente de caniveau (24), étant déplacée le long de l'axe longitudinal du caniveau à fente (21), et des mouvements de pivotement étant effectués dans des plans qui sont perpendiculaires à l'axe longitudinal du caniveau à fente (21).

2. Procédé selon la revendication 1, **caractérisé en ce que** dans une troisième étape, le caniveau à fente (21) est nettoyé avec un rinçage à eau sous haute pression.

3. Procédé selon la revendication 1 ou 2, **caractérisé en ce que** la tête de fraisage (32) est guidée par le biais d'au moins une bague de roulement, de préférence deux bagues de roulement (87, 88), qui déterminent la distance des arêtes de fraisage polycristallines (33) de la tête de fraisage (32) à une surface (89) du caniveau à fente (21) limitant la fente de caniveau (24).

4. Procédé selon l'une quelconque des revendications 1 à 3, **caractérisé en ce que** le tuyau flexible d'habillage (22) est collé par engagement par correspondance géométrique et par force par pressage et durcissement avec le caniveau à fente (21).

5. Dispositif pour rétablir la fonction d'un caniveau à fente, qui est pourvu dudit tuyau flexible d'habillage (22) au moyen d'un procédé selon la revendication 1, lequel tuyau flexible ferme la fente de caniveau (24), **caractérisé en ce qu'**il comprend les composants suivants :
- une fraise supérieure (31), et
- un dispositif de transport pour le transport de la fraise supérieure (31), lequel dispositif de transport comprend les composants suivantes :
- un premier guidage parallèle qui contient deux guides rectilignes parallèles l'un à l'autre (52, 53) et qui fait partie d'un cadre rectangulaire (54), qui peut être posé sur le caniveau à fente (21) de telle sorte que les guides (52, 53) du premier guidage parallèle s'étendent parallèlement à la fente de caniveau (24) et de préférence parallèlement à l'axe longitudinal du caniveau à fente (21),
- une unité de chariot en croix, qui contient un premier chariot (62), qui peut être déplacé le long des guides susmentionnés (52, 53) du premier guidage parallèle, et qui contient un deuxième guidage parallèle, qui comprend deux guides rectilignes parallèles l'un à l'autre (72, 73), et un deuxième chariot (82) qui est disposé sur le premier chariot (62) et qui peut être déplacé le long des guides (72, 73) du deuxième guidage parallèle, et
- un porte-fraise supérieure (81) qui est monté sur le deuxième chariot (82) et qui présente un support de fraise supérieure (83) à ressort, le porte-fraise supérieure (81) pouvant pivoter autour d'un axe de rotation (90) qui est disposé parallèlement aux guides (52, 53) du premier guidage parallèle.

6. Dispositif selon la revendication 5, **caractérisé en ce que** le cadre (54) du premier guidage parallèle présente des serrages excentriques (55, 56) qui peuvent être introduits dans la fente de caniveau (24) et qui servent à orienter le premier guidage parallèle, de sorte que la fraise supérieure (31) puisse être guidée le long d'une trajectoire qui est alignée avec l'axe longitudinal du caniveau à fente (21).

7. Dispositif selon la revendication 5 ou 6, **caractérisé en ce que** le support de fraise supérieure (83) à ressort contient un levier de serrage (84) avec lequel la position de la fraise supérieure (31) pour la profondeur d'usinage souhaitée peut être fixée.

8. Dispositif selon l'une quelconque des revendications 5 à 7, **caractérisé en ce que** la plage de pivotement du support de fraise supérieure (83) est dimensionnée de telle sorte qu'elle permette un positionnement de la tête de fraisage (32) de la fraise supérieure (31) adapté à la section tubulaire conique négative ainsi qu'à la dimension d'arc de la réalisation du tuyau flexible d'habillage (22), pendant le travail de fraisage.

9. Dispositif selon l'une quelconque des revendications 5 à 8, **caractérisé en ce que** le caniveau à fente (21) comprend un caniveau à fente (21) interrompu avec une pluralité de fentes de caniveau (24) séparées les unes des autres et disposées en ligne, et le cadre (54) du premier guidage parallèle présente une longueur qui recouvre au moins deux fentes individuelles (26) du caniveau à fente (21).
